# DEMANDE DE BREVET EUROPEEN

(11) **EP 4 847 381 A1**
(43) Date de publication de la demande: **02.12.2026**
(21) Numéro de dépôt: 26179155.2
(22) Date de dépôt: 18.05.2026
(51) Int. Cl.: B64C 13/16

(54) **PROCÉDÉ ET SYSTÈME DE RÉDUCTION DE CHARGES EN RAFALE GÉNÉRÉES SUR UN AÉRONEF PAR UNE PERTURBATION DUE AU VENT**

(30) Priorité: 22.05.2025 FR 2505484
(71) Demandeur: Airbus SAS, 31700 Blagnac Cedex (FR); Airbus Operations SAS, 31060 Toulouse (FR)
(72) Inventeur: BLANC, Sébastien, 31700 BLAGNAC (FR); QUIROZ-HERNANDEZ, Esteban, 31700 BLAGNAC (FR); VERNAY, Robin, 31060 TOULOUSE (FR); FOURNIER, Hugo, 31700 BLAGNAC (FR)
(74) Mandataire: Gevers & Orès

(57) **Abrégé**

- Le procédé comprend au moins une étape pour acquérir des données caractéristiques de la perturbation et de la dynamique de l'aéronef (AC), une étape pour estimer une vitesse verticale du vent, une étape pour déterminer au moins un ordre de commande dynamique pour des actionneurs susceptibles d'actionner des gouvernes intérieures (3) de l'aéronef (AC) de manière à réduire un moment de flexion dans une bande de fréquences des modes rigides longitudinaux de l'aéronef (AC), l'ordre de commande étant déterminé à partir d'une loi d'allègement de charges, un étape pour transmettre l'ordre de commande auxdits actionneurs et une étape pour commander lesdites gouvernes intérieures (3), le procédé permettant de réduire dynamiquement des charges générées sur l'aéronef (AC) par des perturbations dues au vent et donc d'améliorer le confort des passagers et du pilote.

## Description

### Domaine technique

La présente invention concerne un procédé et un système de réduction de charges en rafale générées sur un aéronef par une perturbation due au vent.

### Etat de la technique

On sait que, dans le cadre d'une certification charge des aéronefs, tels que des avions de transport, il faut considérer plusieurs cas de dimensionnement réglementaires liés respectivement :
- à une manœuvre ;
- à une rafale discrète (« discrete gust » en anglais) ; et
- une turbulence continue (« continuous turbulence » en anglais).

Les deux derniers cas de charges sont parfois plus dimensionnants que les cas de charges liés à une manœuvre. Il serait donc avantageux de pouvoir réduire les niveaux de charge associés à une rafale discrète et à une turbulence continue, ce qui permettrait notamment de réaliser un gain sur la masse structurale de la voilure d'aéronef.

Au-delà des problématiques des charges structurelles (pour le dimensionnement de la structure et la certification de l'aéronef), il existe d'autres problématiques liés aux rafales et turbulences, notamment :
- la sécurité des occupants de la cabine (risque de blessure grave lors des turbulences par la projection d'objets et personnes dans la cabine) ;
- le confort des passagers et du pilote en turbulence.

Pour les aéronefs équipés de systèmes de commandes de vol électriques (EFCS pour « Electrical Flight Control System » en anglais), il est possible d'utiliser les gouvernes (autrement appelées « surfaces de contrôle ») et les capteurs de l'aéronef pour réduire ou atténuer les problèmes précités.

Cependant, la mise en œuvre de ces interventions présente certaines difficultés et risques telles que :
- garantir des marges de flottement adéquates dans des fonctionnement à boucle fermée avec un système EFCS ; et
- ne pas dégrader les charges qui peuvent être dimensionnantes, le confort, et/ou la sécurité cabine lorsque les rafales et les turbulences changent rapidement.

Il existe actuellement des procédés et des systèmes pour réduire les charges exercées sur un élément de structure d'un aéronef, tel qu'une aile de voilure. Les stratégies pour concevoir les lois pour de tels procédés et systèmes sont déterminées par les caractéristiques des composants du système EFCS comme le type, le nombre, la localisation et les performances des capteurs, la rapidité et les capacités des calculateur ou encore le type, le nombre, la taille et les performances des gouvernes.

Le document FR 2 912 991 B1 décrit un procédé de réduction de charges engendrées par des rafales et de la turbulence. Les rafales ou la turbulence sont détectées par la mesure de l'angle d'incidence au nez de l'aéronef. Le braquage (autrement appelé déflection) d'une gouverne est alors commandé pour effectuer une réduction passive de la charge, ce qui veut dire que le braquage reste constant quand la perturbation a été détectée une fois. Ainsi, cela permet d'éviter un couplage aéroélastique.

Toutefois, cette stratégie de réduction passive de charge est limitée dans ses performances quand la perturbation, telle que des rafales ou de la turbulence, change rapidement et peut aussi mener à des charges plus importantes dans certaines situations particulières.

Les solutions existantes ne sont donc pas complètement satisfaisantes.

### Exposé de l'invention

La présente invention a pour objet de remédier aux inconvénients précités. Elle concerne un procédé de réduction de charges générées sur un aéronef par une perturbation due au vent, l'aéronef présentant une voilure comprenant des gouvernes intérieures susceptibles d'être actionnées par des premiers actionneurs.

Selon l'invention, le procédé comprend au moins les étapes suivantes mises en œuvre de façon automatique et répétée :
- une première étape d'acquisition, mise en œuvre par au moins une unité d'acquisition, pour acquérir au moins :
   ∘ un premier ensemble de données correspondant à des grandeurs caractéristiques de la perturbation due au vent mesurées par au moins un capteur de l'aéronef ; et
   ∘ un deuxième ensemble de données correspondant à des grandeurs caractéristiques d'une dynamique de l'aéronef mesurées par une centrale inertielle de l'aéronef ;
- une étape d'estimation, mise en œuvre par au moins un calculateur, pour estimer une vitesse verticale du vent associée à ladite perturbation à partir du premier ensemble de données et du deuxième ensemble de données ;
- une première étape de détermination, mise en œuvre par le calculateur, pour déterminer au moins un premier ordre de commande dynamique destiné à être envoyé aux premiers actionneurs, le ou les ordres de commande étant destinés à engendrer un braquage des gouvernes intérieures desdits premiers actionneurs permettant de réduire un moment de flexion dans une bande de fréquences des modes rigides longitudinaux de l'aéronef, le ou les ordres de commande étant déterminés à partir d'une loi d'allègement des charges prenant en compte la vitesse verticale du vent estimée l'étape d'estimation ;
- une première étape de transmission, mise en œuvre par au moins une première unité de transmission, pour transmettre le ou les ordres de commande déterminés à l'étape de détermination, aux premiers actionneurs des gouvernes intérieures ;
- une première étape de commande, mise en œuvre par les premiers actionneurs, pour commander les gouvernes intérieures à l'aide du ou des ordres de commande transmis à la première étape de transmission.

Ainsi, grâce à l'invention, on est en mesure de réduire dynamiquement des charges générées sur l'aéronef, notamment en atténuant la réponse des modes rigides de l'aéronef AC à ladite perturbation ce qui permet d'améliorer le confort des passagers et du pilote et pourrait également permettre un gain de masse structurale lors du dimensionnement des aéronefs.

Avantageusement, le premier ensemble de données comprend au moins l'une des données suivantes : une incidence totale mesurée par un capteur d'incidence de l'aéronef, une vitesse du vent totale mesurée par un capteur de vitesse de l'aéronef.

Dans un mode de réalisation particulier, l'étape d'estimation comprend au moins :
- une sous-étape de détermination pour déterminer une contribution attribuable à des mouvements rigides de l'aéronef à partir du deuxième ensemble de données acquis à l'étape d'acquisition ;
- une sous-étape de calcul pour calculer la vitesse verticale du vent associée à la perturbation à partir de ladite contribution et de l'incidence totale ou de la vitesse du vent totale.

En outre, de façon avantageuse, le deuxième ensemble de données comprend au moins l'une des données suivantes : un facteur de charge verticale de l'aéronef, un angle d'assiette de l'aéronef, une vitesse de tangage de l'aéronef.

Dans un mode de réalisation particulier, le procédé comprend une étape d'activation, mise en œuvre par le calculateur, pour mettre en œuvre la première étape de détermination et/ou la première étape de transmission si un ensemble d'au moins une condition d'activation prédéterminée est remplie, la ou les conditions d'activation comprenant au moins une condition pour éviter un risque de dépassement des charges limites de l'aéronef.

Dans un mode de réalisation particulier, le procédé comprend en outre :
- une deuxième étape de détermination, mise en œuvre par le calculateur, pour déterminer au moins un deuxième ordre de commande destiné à être envoyé à des deuxièmes actionneurs susceptibles d'actionner des gouvernes de profondeur de l'aéronef, le deuxième ordre de commande étant configuré pour compenser un moment de tangage engendré par le braquage des gouvernes intérieures actionnées par le premier ordre de commande déterminé dans l'étape de détermination ;
- une deuxième étape de transmission, mise en œuvre par au moins une deuxième unité de transmission, pour transmettre aux deuxièmes actionneurs le deuxième ordre de commande déterminé à la deuxième étape de détermination ;
- une deuxième étape de commande, mise en œuvre par les deuxièmes actionneurs, pour commander les gouvernes de profondeur à partir du ou des ordres de commande auxiliaires transmis à la deuxième étape de transmission.

Avantageusement, à la première étape de détermination, le premier ordre de commande déterminé par la loi d'allègement est obtenu en multipliant la vitesse verticale du vent estimée à l'étape d'estimation à un gain prédéterminé.

En outre, de façon avantageuse, à la première étape de détermination, le premier ordre de commande déterminé par la loi d'allègement est obtenu en filtrant la vitesse verticale du vent estimée à l'étape d'estimation, à l'aide d'un filtre correspondant à un rapport entre, d'une part, l'incidence totale mesurée par le capteur d'incidence et, d'autre part, une incidence du vent.

La présente invention concerne également un système de réduction de charges générées sur un aéronef par une perturbation due au vent, l'aéronef présentant une voilure comprenant des gouvernes intérieures susceptibles d'être actionnées par des premiers actionneurs.

Selon l'invention, le système comprend au moins :
- une unité d'acquisition configurée pour acquérir au moins :
   ∘ un premier ensemble de données correspondant à des grandeurs caractéristiques de la perturbation due au vent mesurées par au moins un capteur de l'aéronef ; et
   ∘ un deuxième ensemble de données correspondant à des grandeurs caractéristiques d'une dynamique de l'aéronef mesurées par une centrale inertielle de l'aéronef ;
- un calculateur configuré pour :
   ∘ estimer une vitesse verticale du vent associée à ladite perturbation à partir du premier ensemble de données et du deuxième ensemble de données ; et
   ∘ déterminer au moins un premier ordre de commande dynamique destiné à être envoyé aux premiers actionneurs, le ou les ordres de commande étant destinés à engendrer un braquage des gouvernes intérieures desdits premiers actionneurs permettant de réduire un moment de flexion dans une bande de fréquences des modes rigides longitudinaux de l'aéronef, le ou les ordres de commande étant déterminés à partir d'une loi d'allègement des charges prenant en compte la vitesse verticale du vent estimée ;
- une première unité de transmission configurée pour transmettre le ou les ordres de commande déterminés par le calculateur, aux premiers actionneurs des gouvernes intérieures.

La présente invention concerne également un aéronef comportant un système de réduction de charges générées sur un aéronef par une perturbation due au vent tel que décrit ci-dessus.

### Brève description des figures

Les figures annexées feront bien comprendre comment l'invention peut être réalisée. Sur ces figures, des références identiques désignent des éléments semblables.
La figure 1 représente schématiquement un système de réduction de charges générées sur un aéronef par une perturbation due au vent selon un mode de réalisation particulier.
La figure 2 est un schéma synoptique d'un procédé de réduction de charges générées sur un aéronef par une perturbation due au vent selon un mode de réalisation particulier.
La figure 3 représente une vue de dessus d'un aéronef équipé d'un système de réduction de charges générées par une perturbation due au vent selon un mode de réalisation particulier.
La figure 4 représente une vue de face d'un aéronef avec deux distributions de portance sur une voilure de l'aéronef.

### Description détaillée

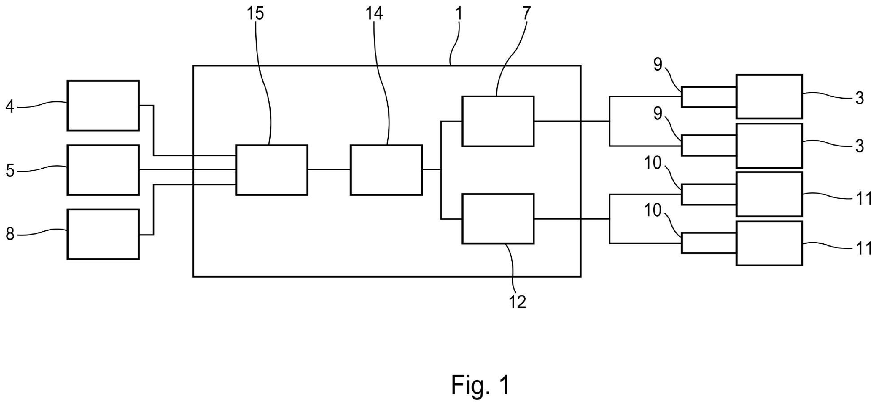

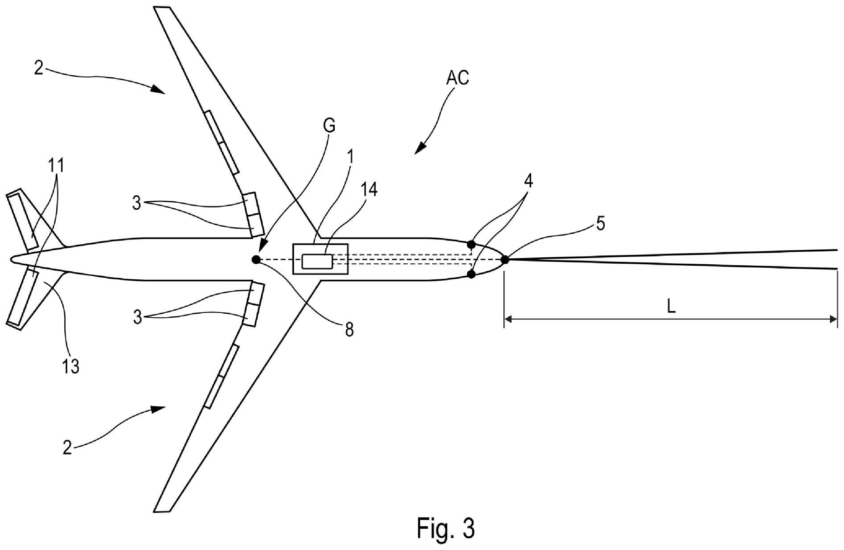

Le système 1 de de réduction de charges (ci-après système 1) est représenté schématiquement dans des modes de réalisation particuliers sur la figure 1 et la figure 3. Il s'agit d'un système destiné à réduire les charges générées sur un aéronef AC par une perturbation due au vent.

Dans le cadre de la présente description, l'expression « perturbation due au vent » désigne des mouvements de masses d'air susceptibles de générer des efforts sur une partie de l'aéronef AC. Il peut s'agir, par exemple, de rafales de vent discrètes ou de turbulences. Bien que non exclusivement, la présente invention est particulièrement adaptée pour réduire les charges générées par des perturbations discontinues qui changent rapidement.

Comme représenté sur la figure 3, l'aéronef AC présente une voilure 2 comportant des gouvernes intérieures 3 susceptibles d'être actionnées par des actionneurs 9 (figure 1), dits premiers actionneurs. Les gouvernes intérieures 3 correspondent à des gouvernes proches de l'extrémité intérieure des ailes, c'est-à-dire l'extrémité reliée au caisson de voilure de l'aéronef AC, par exemple des ailerons intérieurs.

Le système 1 est particulier en ce qu'il permet d'agir de manière dynamique sur les gouvernes intérieures 3 lorsque l'aéronef AC subit les effets de perturbations dues au vent, de manière à contrôler le facteur de charge verticale de l'aéronef AC comme expliqué ci-après.

Dans le mode de réalisation particulier de la figure 3, le système 1 est embarqué sur l'aéronef AC. Comme représenté schématiquement sur la figure 1, le système 1 comprend au moins un calculateur 14 et au moins une unité d'acquisition 15. Le calculateur 14 peut correspondre à un calculateur avionique comprenant des éléments électroniques usuels tels qu'un microprocesseur. L'unité d'acquisition 15 peut correspondre à une carte électronique d'acquisition usuelle qui peut être intégrée au calculateur 14.

L'unité d'acquisition 15 est configurée pour acquérir, d'une part, un premier ensemble de données et, d'autre part, un deuxième ensemble de données. L'unité d'acquisition est apte à fournir au calculateur 14 lesdits ensembles de données.

Le calculateur 14, quant à lui, est configuré pour estimer la vitesse verticale du vent à partir des ensembles de données fournis par l'unité d'acquisition 15. La vitesse verticale du vent correspond à la vitesse du vent à laquelle on a retranché les composantes liées au mouvement de l'aéronef AC.

Le calculateur 14 est également configuré pour déterminer un premier ordre de commande pour les gouvernes intérieures 3 à partir de la vitesse verticale du vent estimée et d'une loi d'allègement des charges comme expliqué ci-après.

Le premier ensemble de données correspond à des grandeurs caractéristiques de la perturbation due au vent subie par l'aéronef AC. Ces grandeurs peuvent être mesurées par des capteurs de l'aéronef AC. Dans le mode de réalisation particulier de la figure 1 et de la figure 3, le premier ensemble de données peut être fourni par au moins un capteur d'incidence 4 et/ou par au moins un capteur de vitesse 5.

Le capteur d'incidence 4 peut correspondre à une sonde d'incidence usuelle agencée au niveau du nez de l'aéronef AC. Un tel capteur d'incidence 4 est apte à mesurer une incidence totale de l'aéronef AC, à savoir l'angle que forme une direction longitudinale de l'aéronef AC avec la trajectoire dudit aéronef AC (ou avec le vent relatif). L'incidence totale comprend une composante attribuable au mouvement de l'aéronef AC et une composante attribuable à la perturbation due au vent que l'aéronef AC subit.

Le capteur de vitesse 5 peut correspondre à un dispositif de détection et télémétrie par la lumière, autrement appelé LiDAR (pour « Light Detection and Ranging » en anglais) agencé au niveau du nez de l'aéronef AC. Un tel dispositif est apte à mesurer des distances et des mouvements précis en temps réel et notamment à mesurer la vitesse du vent totale (c'est-à-dire la vitesse du vent mesurée en tenant compte des mouvements de l'aéronef AC).

Selon le mode de réalisation considéré, le système 1 peut utiliser les grandeurs mesurées par le capteur d'incidence 4 ou les grandeurs mesurées par le capteur de vitesse 5. Par exemple, dans un mode de réalisation particulier, le calculateur 14 peut être configuré pour définir (c'est-à-dire choisir) préalablement au moins une méthode d'estimation de la vitesse verticale du vent à mettre en œuvre. La méthode d'estimation détermine, notamment, quel capteur parmi le capteur d'incidence 4 et le capteur de vitesse 5 doit être utilisé et quelle loi d'allègement associée doit être utilisée pour estimer la vitesse verticale du vent.

Le choix de la méthode d'estimation peut être basé sur des conditions prédéterminées pouvant comprendre des conditions telles qu'un seuil d'incertitude de mesure. La méthode d'estimation peut ainsi être définie si les incertitudes de mesure des mesures acquises par l'unité d'acquisition 15 sont supérieures ou égales à un seuil d'incertitude prédéterminé. Le seuil d'incertitude de mesure peut dépendre de circonstances de mesures telles que des conditions atmosphériques, etc. Cela permet d'assurer une qualité minimale requise des mesures par le capteur d'incidence 4 et le capteur de vitesse 5.

Dans le cas où le capteur de vitesse 5 est un LiDAR, le choix peut aussi dépendre de la distance L des points focaux du LiDAR. Les points focaux doivent donner suffisamment d'avance pour comparer favorablement avec le capteur d'incidence 4. De façon non limitative, la distance L typique est comprise entre 100 m et 200 m devant le nez de l'aéronef AC.

Dans un autre mode de réalisation particulier, il est également envisageable que le système 1 utilise conjointement les grandeurs mesurées par le capteur d'incidence 4 et les grandeurs mesurées par le capteur de vitesse 5.

Le deuxième ensemble de données correspond à des grandeurs caractéristiques de la dynamique de l'aéronef AC. Ces grandeurs peuvent être mesurées par une centrale inertielle 8 agencée au niveau du centre de gravité G de l'aéronef AC. De manière non exhaustive, le deuxième ensemble de données peut comprendre un facteur de charge vertical de l'aéronef AC, un angle d'assiette de l'aéronef AC et une vitesse de tangage de l'aéronef AC.

Le calculateur 14 est configuré pour estimer la vitesse verticale du vent à partir des données fournies par l'unité d'acquisition 15.

Dans un premier mode de réalisation particulier, le calculateur 14 estime la vitesse verticale du vent à partir de l'incidence totale mesurée par le capteur d'incidence 4. Pour cela, le calculateur 14 est programmé à l'aide d'équations de la mécanique de vol usuelles de manière à retrancher de l'incidence totale mesurée, l'incidence qui est attribuable aux mouvements rigides de l'aéronef AC. Après traitement, on obtient une incidence du vent à partir de laquelle le calculateur 14 est configuré pour estimer la vitesse verticale du vent. En effet, en utilisant l'incidence du vent et des informations supplémentaires comprises dans le deuxième ensemble de données fourni par la centrale inertielle 8, notamment la vitesse vraie (ou VTAS) de l'aéronef AC, il est possible d'obtenir la vitesse verticale du vent par simples calculs sur les angles.

Dans un deuxième mode de réalisation particulier, le calculateur 14 estime la vitesse verticale du vent à partir de la vitesse du vent totale mesurée par le capteur de vitesse 5. Pour cela, le calculateur 14 est programmé à l'aide d'équations de la mécanique de vol usuelles de manière à retrancher de la vitesse du vent totale mesurée par le capteur de vitesse 5, la composante qui est attribuable aux mouvements rigides de l'aéronef AC. On obtient alors la vitesse verticale du vent.

En outre, le calculateur 14 est configuré pour déterminer au moins un premier ordre de commande dynamique destiné à être envoyé aux actionneurs 9. Le premier ordre de commande est déterminé à partir d'une loi d'allègement des charges prenant en compte la vitesse verticale du vent estimée par le calculateur 14.

Le premier ordre de commande est destiné à engendrer un braquage des gouvernes intérieures 3 desdits actionneurs 9 permettant principalement de réduire un moment de flexion dans une bande de fréquence des modes rigides longitudinaux de l'aéronef AC. Concrètement, le premier ordre de commande est configuré de manière à obtenir un braquage des gouvernes extérieures 3 qui réduit artificiellement le coefficient de portance de l'aéronef AC.

En outre, un tel braquage des gouvernes extérieures 3 peut également réduire, dans une moindre mesure, le moment de flexion dans une bande de fréquence d'un premier mode de flexion de la voilure 2. Une bande de fréquence d'un premier mode de flexion de la voilure 2 est définie comme étant comprise entre 0 Hz et une fréquence prédéterminée permettant de contrôler le premier mode de flexion de la voilure 2.

Dans un mode de réalisation particulier, le premier ordre de commande peut correspondre à un gain prédéterminé multiplié par la vitesse verticale du vent estimée. De plus, le calculateur 14 peut être configuré pour filtrer la vitesse verticale du vent estimée. Le filtre est choisi pour minimiser les charges de flexion de la voilure 2 induites par la perturbation due au vent. Le premier ordre de commande transmis aux actionneurs 9 peuvent ainsi correspondre à un gain multiplié par la vitesse verticale du vent estimée et filtrée. Le filtre peut correspondre à un rapport entre, d'une part, l'incidence totale mesurée par le capteur d'incidence 4 et, d'autre part l'incidence du vent (à savoir la composante d'incidence définie uniquement à partir de la vitesse du vent par rapport au système de coordonnées de l'aéronef AC à un instant donné, sans prendre en compte les mouvements de l'aéronef AC).

Ce filtre est mis à jour de façon continue par le calculateur 14 selon le point de vol, à savoir selon l'altitude de l'aéronef AC, la masse de l'aéronef AC, le centrage de l'aéronef AC, etc.

Par ailleurs, comme représenté schématiquement sur la figure 1, le système 1 comprend au moins une première unité de transmission 7 configurée pour transmettre le premier ordre de commande déterminé par le calculateur 14 aux actionneurs 9 des gouvernes intérieures 3 de manière à commander lesdites gouvernes intérieures 3.

Dans un mode de réalisation particulier, le système 1 est configuré pour déterminer et/ou transmettre le premier ordre de commande aux actionneurs 9 si un ensemble d'au moins une condition d'activation prédéterminée est remplie. La ou les conditions d'activation comprennent au moins une condition pour éviter un risque de dépassement de charges limites de l'aéronef AC.

La ou les conditions d'activation peuvent comprendre au moins un seuil de braquage prédéterminé. Par exemple, si le premier ordre de commande déterminé engendre un braquage des gouvernes extérieures 3 inférieur ou égal à un seuil de braquage prédéterminé, alors les conditions d'activation ne sont pas remplies. Dans ce cas, le premier ordre de commande déterminé par le calculateur 14 n'est pas transmis aux actionneurs 9 et les gouvernes intérieures 3 ne sont pas braquées. Cela permet de minimiser les petits ordres de commande qui pourraient dégrader la performance aérodynamique (consommation de fuel) ou de minimiser les petits ordres de commande qui pourraient avoir une incidence sur le confort ou la trajectoire de l'aéronef AC sans bénéfice.

L'ensemble de conditions prédéterminées peut aussi comprendre au moins un seuil d'incidence totale mesurée. Par exemple, si l'incidence totale mesurée est inférieure ou égale à un seuil prédéterminé d'incidence, alors les conditions d'activation ne sont pas remplies. Dans ce cas, la loi d'allègement de charge n'est pas activée et le calculateur 14 ne détermine pas d'ordre de commande. Cela permet de minimiser la fatigue des actionneurs 9 en évitant des ordres de commande trop petits et trop fréquents.

Par ailleurs, dans un mode de réalisation particulier représenté sur la figure 3, le calculateur 14 est configuré pour déterminer au moins un deuxième ordre de commande destiné à être envoyé à des actionneurs 10, dits deuxièmes actionneurs, susceptibles d'actionner des gouvernes de profondeur 11. Les gouvernes de profondeur 11 sont disposées au niveau de l'empennage horizontal 13 de l'aéronef AC.

Le deuxième ordre de commande est configuré pour compenser un moment de tangage engendré par le braquage des gouvernes intérieures 3 de la voilure 2 actionnées par les actionneurs 9 commandés par le premier ordre de commande déterminé par le calculateur 14.

À cet effet, le système 1 peut comprendre au moins une deuxième unité de transmission 12 configurée pour transmettre aux actionneurs 10 le deuxième ordre de commande déterminé par le calculateur 14. Les gouvernes de profondeur 11 sont ainsi braquées à partir du deuxième ordre de commande transmis aux actionneurs auxiliaires 10 par la deuxième unité de transmission 12.

Ainsi, grâce au système 1 tel que décrit ci-dessus, on est en mesure de réduire dynamiquement des charges générées sur l'aéronef AC par des perturbations dues au vent. En effet, l'estimation de la vitesse verticale du vent permet d'anticiper les charges générées par le vent sur l'aéronef AC. En fonction de cette estimation, les gouvernes extérieures 3 sont braquées de manière à contrer, au moins en partie, les effets desdites charges, notamment en atténuant la réponse des modes rigides de l'aéronef AC à ladite perturbation. En conséquence, les charges générées sur l'aéronef AC par la perturbation due au vent sont réduites. Cela permet d'améliorer le confort des passagers et du pilote sans dégrader la sécurité. Cela pourrait également permettre un gain de masse structurale lors du dimensionnement des aéronefs.

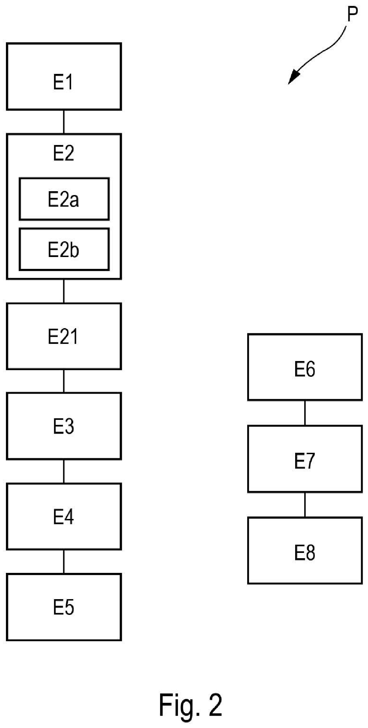

Le système 1 tel que décrit ci-dessus est adapté pour mettre en œuvre un procédé P de réduction de charges générées sur un aéronef AC par une perturbation due au vent (ci-après procédé P). Comme représenté schématiquement sur la figure 2, dans un mode de réalisation particulier le procédé P comprend au moins les étapes suivantes mises en œuvre de façon automatique et répétée : une étape E1 d'acquisition, une étape E2 d'estimation, une première étape E3 de détermination une première étape E4 de transmission et une première étape E5 de commande.

L'étape E1 est mise en œuvre par l'unité d'acquisition 15 pour acquérir au moins :
- le premier ensemble de données correspondant à des grandeurs caractéristiques de la perturbation due au vent qui sont mesurées par le capteur d'incidence 4 et/ou le capteur de vitesse 5 de l'aéronef AC ; et
- le deuxième ensemble de données correspondant aux grandeurs caractéristiques de la dynamique de l'aéronef AC qui sont mesurées par une centrale inertielle 8 de l'aéronef AC.

L'étape E2 est mise en œuvre par le calculateur 14 pour estimer la vitesse verticale du vent associée à la perturbation subie par l'aéronef AC à partir du premier ensemble de données et du deuxième ensemble de données.

L'étape E3 est mise en œuvre par le calculateur 14 pour déterminer le premier ordre de commande dynamique destiné à être envoyé aux actionneurs 9. Le premier ordre de commande est déterminé à partir de la loi d'allègement des charges prenant en compte la vitesse verticale du vent estimée à l'étape E2 comme expliqué ci-dessus.

L'étape E4 est mise en œuvre par l'unité de transmission 7 pour transmettre le premier ordre de commande déterminé à l'étape E3 aux actionneurs 9 des gouvernes intérieures 3.

L'étape E5 est mise en œuvre par les actionneurs 9 pour commander les gouvernes intérieures 3 à l'aide de le premier ordre de commande transmis à la l'étape E4.

Dans un mode de réalisation particulier, l'étape E2 comprend une première sous-étape E2a de détermination et une sous-étape E2b de calcul, toutes les deux étant mises en œuvre par le calculateur 14. L'étape E2a est destinée à être mise en œuvre pour déterminer la contribution attribuable aux mouvements rigides de l'aéronef AC à partir du deuxième ensemble de données acquis à l'étape E1. L'étape E2b est destinée à être mise en œuvre pour calculer la vitesse verticale du vent associée à la perturbation subie par l'aéronef AC à partir de ladite contribution et de l'incidence totale mesurée par le capteur d'incidence 4 ou de la vitesse du vent totale mesurée par le capteur de vitesse 5 comme expliqué ci-avant.

Dans un mode de réalisation particulier, le procédé P comprend une étape E21 d'activation. L'étape E21 est mise en œuvre par le calculateur 14 pour mettre en œuvre l'étape E3 et/ou l'étape E4 si un ensemble d'au moins une condition d'activation prédéterminée est remplie. La ou les conditions d'activation comprennent au moins une condition pour éviter un risque de dépassement des charges limites de l'aéronef AC. Selon le mode de réalisation considéré, l'étape E21 peut être mise en œuvre avant ou après l'étape E3. En effet, si la ou les conditions d'activation définissent qu'un premier ordre de commande doit être déterminé ou non, alors l'étape E21 est mise en œuvre avant l'étape E3. Si la ou les conditions d'activation définissent qu'un premier ordre de commande doit être transmis par l'unité de transmission 7 aux actionneurs 9, alors l'étape E21 est mise en œuvre après l'étape E3.

Dans un mode de réalisation particulier, le procédé P comprend de plus une deuxième étape E6 de détermination, une deuxième étape E7 de transmission et une deuxième étape E8 de commande.

L'étape E6 est mise en œuvre par le calculateur 14 pour déterminer le deuxième ordre de commande destiné à être envoyé aux actionneurs auxiliaires 10 susceptibles d'actionner des gouvernes de profondeur 11 de l'aéronef AC.

L'étape E7 est mise en œuvre par l'unité de transmission 12 pour transmettre aux actionneurs auxiliaires 10 le deuxième ordre de commande déterminé à l'étape E6.

L'étape E8 est mise en œuvre par les actionneurs auxiliaires 10 pour commander les gouvernes de profondeur 11 à partir du deuxième ordre de commande transmis à l'étape E7.

Ainsi, le procédé P mis en œuvre par le système 1 tel que décrit ci-dessus utilise le principe de portance directe pour contrôler le facteur de charge verticale de l'aéronef AC. Autrement dit, en utilisant les gouvernes intérieures 3 situées sur la partie intérieure de la voilure 2, il est possible de contrôler de manière dynamique les charges verticales générées par le perturbation due au vent de manière à réduire les effets de ladite perturbation sur le moment de flexion de l'aéronef AC, en particulier d'atténuer la réponse des modes rigides de l'aéronef AC à ladite perturbation.

Contrairement aux techniques d'allègement de charges basées sur le contrôle statique de portance directe, le procédé P utilise des données dynamiques qui caractérisent en temps réel l'évolution du vent vertical, et calcule un ordre envoyé aux gouvernes intérieures 3 pour atténuer le moment de flexion de l'aéronef AC.

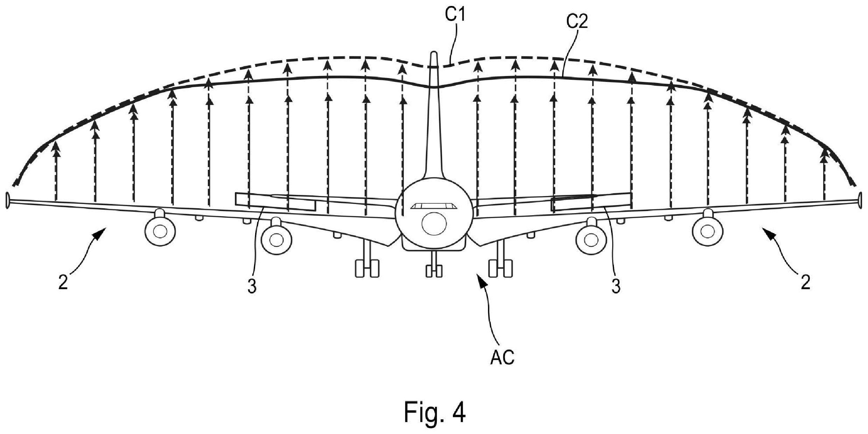

La figure 4 illustre cette atténuation du moment de flexion sur la voilure 2. Les courbes C1 et C2 indiquent la distribution de la portance sur la voilure 2. La courbe C1 en ligne interrompue montre la distribution de la portance sans la mise en œuvre du procédé P. La courbe C2 en ligne continue montre la distribution de la portance avec le mise en œuvre du procédé P. Le procédé P permet donc une redistribution avantageuse de la portance sur la voilure 2.

En outre, le système 1 tel que décrit ci-dessus présente de nombreux avantages. En particulier :
- il permet d'améliorer la réduction du moment de flexion des ailes en réponse à une perturbation due au vent par rapport aux techniques reposant sur des braquages de gouvernes statiques ;
- il est permet de réduire le moment de flexion négatif (en valeur absolue) en réponse à une perturbation due à un vent vertical alors que les techniques basées sur des braquages statiques tendent, au contraire, à les augmenter ;
- il permet une amélioration du confort des passagers et du pilote en atténuant la réponse dynamique de l'aéronef AC à une perturbation due au vent.

## Revendications

1. **Procédé** de réduction de charges générées sur un aéronef (AC) par une perturbation due au vent, l'aéronef (AC) présentant une voilure (2) comprenant des gouvernes intérieures (3) susceptibles d'être actionnées par des premiers actionneurs (9),
**caractérisé en ce qu'**il comprend au moins les étapes suivantes mises en œuvre de façon automatique et répétée :
- une première étape (E1) d'acquisition, mise en œuvre par au moins une unité d'acquisition (15), pour acquérir au moins :
∘ un premier ensemble de données correspondant à des grandeurs caractéristiques de la perturbation due au vent mesurées par au moins un capteur de l'aéronef (AC), le premier ensemble de données comprenant au moins l'une des données suivantes : une incidence totale mesurée par un capteur d'incidence (4) de l'aéronef (AC), une vitesse du vent totale mesurée par un capteur de vitesse (5) de l'aéronef (AC) ; et
∘ un deuxième ensemble de données correspondant à des grandeurs caractéristiques d'une dynamique de l'aéronef (AC) mesurées par une centrale inertielle (8) de l'aéronef ;
- une étape (E2) d'estimation, mise en œuvre par au moins un calculateur (14), pour estimer une vitesse verticale du vent associée à ladite perturbation à partir du premier ensemble de données et du deuxième ensemble de données ;
- une première étape (E3) de détermination, mise en œuvre par le calculateur (14), pour déterminer au moins un premier ordre de commande dynamique destiné à être envoyé aux premiers actionneurs (9), le ou les ordres de commande étant destinés à engendrer un braquage des gouvernes intérieures (3) desdits premiers actionneurs (9) permettant de réduire un moment de flexion dans une bande de fréquences des modes rigides longitudinaux de l'aéronef (AC), le ou les ordres de commande étant déterminés à partir d'une loi d'allègement des charges prenant en compte la vitesse verticale du vent estimée l'étape (E2) d'estimation, le premier ordre de commande déterminé par la loi d'allègement est obtenu en filtrant la vitesse verticale du vent estimée à l'étape (E2) d'estimation, à l'aide d'un filtre correspondant à un rapport entre, d'une part, l'incidence totale mesurée par le capteur d'incidence (4) et, d'autre part, une incidence du vent ;
- une première étape (E4) de transmission, mise en œuvre par au moins une première unité de transmission (7), pour transmettre le ou les ordres de commande déterminés à l'étape (E3) de détermination, aux premiers actionneurs (9) des gouvernes intérieures (3) ;
- une première étape (E5) de commande, mise en œuvre par les premiers actionneurs (9), pour commander les gouvernes intérieures (3) à l'aide du ou des ordres de commande transmis à la première étape (E4) de transmission.

2. Procédé selon la revendication 1,
**caractérisé en ce que** l'étape (E2) d'estimation comprend au moins :
- une sous-étape (E2a) de détermination pour déterminer une contribution attribuable à des mouvements rigides de l'aéronef (AC) à partir du deuxième ensemble de données acquis à l'étape (E1) d'acquisition ;
- une sous-étape (E2b) de calcul pour calculer la vitesse verticale du vent associée à la perturbation à partir de ladite contribution et de l'incidence totale ou de la vitesse du vent totale.

3. Procédé selon l'une quelconque des revendications 1 ou 2,
**caractérisé en ce que** le deuxième ensemble de données comprend au moins l'une des données suivantes : un facteur de charge verticale de l'aéronef, un angle d'assiette de l'aéronef, une vitesse de tangage de l'aéronef.

4. Procédé selon l'une quelconque des revendications 1 à 3,
**caractérisé en ce qu'**il comprend une étape (E21) d'activation, mise en œuvre par le calculateur (14), pour mettre en œuvre la première étape (E3) de détermination et/ou la première étape (E4) de transmission si un ensemble d'au moins une condition d'activation prédéterminée est remplie, la ou les conditions d'activation comprenant au moins une condition pour éviter un risque de dépassement des charges limites de l'aéronef (AC).

5. Procédé selon l'une quelconque des revendications 1 à 4,
**caractérisé en ce qu'**il comprend en outre :
- une deuxième étape (E6) de détermination, mise en œuvre par le calculateur (14), pour déterminer au moins un deuxième ordre de commande auxiliaire destiné à être envoyé à des deuxièmes actionneurs (10) susceptibles d'actionner des gouvernes de profondeur (11) de l'aéronef (AC), le deuxième ordre de commande étant configuré pour compenser un moment de tangage engendré par le braquage des gouvernes intérieures (3) actionnées par le premier ordre de commande déterminé dans l'étape (E3) de détermination ;
- une deuxième étape (E7) de transmission, mise en œuvre par au moins une deuxième unité de transmission (12), pour transmettre aux deuxièmes actionneurs (10) le deuxième ordre de commande déterminé à la deuxième étape (E6) de détermination ;
- une deuxième étape (E8) de commande, mise en œuvre par les deuxièmes actionneurs (10), pour commander les gouvernes de profondeur (11) à partir du ou des ordres de commande auxiliaires transmis à la deuxième étape (E7) de transmission.

6. Procédé selon l'une quelconque des revendications 1 à 5,
**caractérisé en ce qu'**à la première étape (E3) de détermination, le premier ordre de commande déterminé par la loi d'allègement est obtenu en multipliant la vitesse verticale du vent estimée à l'étape (E2) d'estimation à un gain prédéterminé.

7. Système de réduction de charges générées sur un aéronef (AC) par une perturbation due au vent, l'aéronef (AC) présentant une voilure (2) comprenant des gouvernes intérieures (3) susceptibles d'être actionnées par des premiers actionneurs (9),
**caractérisé en ce qu'**il comprend au moins :
- une unité d'acquisition (15) configurée pour acquérir au moins :
∘ un premier ensemble de données correspondant à des grandeurs caractéristiques de la perturbation due au vent mesurées par au moins un capteur de l'aéronef (AC), le premier ensemble de données comprenant au moins l'une des données suivantes : une incidence totale mesurée par un capteur d'incidence (4) de l'aéronef (AC), une vitesse du vent totale mesurée par un capteur de vitesse (5) de l'aéronef (AC) ; et
∘ un deuxième ensemble de données correspondant à des grandeurs caractéristiques d'une dynamique de l'aéronef (AC) mesurées par une centrale inertielle (8) de l'aéronef (AC) ;
- un calculateur (14) configuré pour :
∘ estimer une vitesse verticale du vent associée à ladite perturbation à partir du premier ensemble de données et du deuxième ensemble de données ; et
∘ déterminer au moins un premier ordre de commande dynamique destiné à être envoyé aux premiers actionneurs (9), le ou les ordres de commande étant destinés à engendrer un braquage des gouvernes intérieures (3) desdits premiers actionneurs (9) permettant de réduire un moment de flexion dans une bande de fréquences des modes rigides longitudinaux de l'aéronef (AC), le ou les ordres de commande étant déterminés à partir d'une loi d'allègement des charges prenant en compte la vitesse verticale du vent estimée, le premier ordre de commande déterminé par la loi d'allègement étant obtenu en filtrant la vitesse verticale du vent estimée, à l'aide d'un filtre correspondant à un rapport entre, d'une part, l'incidence totale mesurée par le capteur d'incidence (4) et, d'autre part, une incidence du vent ;
- une première unité de transmission (7) configurée pour transmettre le ou les ordres de commande déterminés par le calculateur (14) aux premiers actionneurs (9) des gouvernes intérieures (3).

8. Aéronef,
**caractérisé en ce qu'**il comporte un système (1) de réduction de charges générées sur un aéronef (AC) par une perturbation due au vent selon la revendication 7.
